# EUROPÄISCHE PATENTANMELDUNG

(11) **EP 4 079 137 A1**
(43) Veröffentlichungstag der Anmeldung: **26.10.2022**
(21) Anmeldenummer: 21192644.9
(22) Anmeldetag: 23.08.2021
(51) Int. Cl.: A01D 34/66, A01D 34/80, A01D 34/86, A01D 43/12

(54) **LANDMASCHINE**

(30) Priorität: 23.04.2021 EP 21170304
(71) Anmelder: Gottardi, Igor, 39044 Neumarkt Südtirol (IT)
(72) Erfinder: Gottardi, Igor, 39044 Neumarkt Südtirol (IT)

(57) **Zusammenfassung**

Die Erfindung betrifft eine Landmaschine, aufweisend einen Geräteträger mit einer Befestigungsvorrichtung zur Befestigung an einem Fahrzeug, einen relativ zum Geräteträger verschwenkbar gelagerten Ausleger, und eine drehbar am Ausleger befestigte Funktionsvorrichtung, wobei die Funktionsvorrichtung wenigstens drei, vorzugsweise vier, kleeblattförmig angeordnete Funktionseinheiten aufweist, wobei an jeder Funktionseinheit genau ein rotierbares Arbeitsmesser angeordnet ist.

## Beschreibung

Die Erfindung betrifft eine Landmaschine, aufweisend einen Geräteträger mit einer Befestigungsvorrichtung zur Befestigung an einem Fahrzeug, einen relativ zum Geräteträger verschwenkbar gelagerten Ausleger, und mehrere Arbeitsmesser.

Es sind verschiedenste Landmaschinen bekannt. Diese weisen häufig einen schwenkbaren Ausleger auf, um einfacher transportiert werden zu können.

Zum Schneiden von Gras sind z.B. Balkenmäher oder Messerwalzen bekannt, welche z.B. an einem Traktor befestigt werden können.

Diese eignen sich jedoch lediglich für große, freie Flächen. Bei Hindernissen bleiben hingegen erhebliche Flächen, welche nicht geschnitten werden, übrig.

Es ist daher eine Aufgabe der Erfindung, eine Landmaschine sowie ein Verfahren zum Mähen und/oder Krümeln zu schaffen, bei der/m Flächen mit Hindernissen bearbeitet werden können.

Die Lösung dieser Aufgabe erfolgt durch die Landmaschine sowie das Verfahren der unabhängigen Ansprüche.

Die erfindungsgemäße Landmaschine weist einen Geräteträger mit einer Befestigungsvorrichtung zur Befestigung an einem Fahrzeug auf.

Bei dem Fahrzeug kann es sich beispielsweise um eine Zugmaschine, z.B. einen Traktor oder ein Raupengerät, einen Mulcher und/oder einen Grasschneider handeln. Die Landmaschine kann über die Befestigungsvorrichtung beispielsweise an der Zugmaschine angekoppelt werden.

Die Befestigungsvorrichtung ist vorzugsweise multifunktional ausgebildet. So kann die Landmaschine z.B. vorne, hinten oder seitlich am Fahrzeug befestigt werden. Beispielsweise kann die Landmaschine gezogen oder geschoben werden.

Die Landmaschine weist einen relativ zum Geräteträger verschwenkbar gelagerten Ausleger auf. Durch den Ausleger kann die Landmaschine z.B. einfacher transportiert werden.

Am Ausleger ist eine Funktionsvorrichtung drehbar befestigt.

Vorzugsweise ist am Ausleger ein einstellbares, z.B. vorgespanntes, Federpaket vorgesehen, welches die Funktionsvorrichtung ausbalanciert. Die Funktionsvorrichtung kann beispielsweise relativ schwer sein, z.B. etwa 70 kg. Durch das Federpaket kann diese auf etwa 5 kg bis 10 kg ausbalanciert werden.

Das Gesamtgewicht der Landmaschine kann beispielsweise zwischen 150 kg und 300 kg, z.B. 230 kg, betragen.

Die Landmaschine kann beispielsweise weitere, vorzugsweise einstellbare, Dämpfer und/oder Federn aufweisen. Ein Benutzer kann die gewünschten Einstellungen vorzugsweise selbst vornehmen und an das jeweilige Einsatzgebiet anpassen. Die Landmaschine ist dadurch vielseitig einsetzbar.

Vorzugsweise umfasst die Funktionsvorrichtung ein rostfreies Metallmaterial, beispielsweise Aluminium, z.B. Aluminium 7075, oder besteht daraus. Das rostfreie Metallmaterial ermöglicht einen langlebigen Einsatz.

Die Funktionsvorrichtung weist wenigstens drei, vorzugsweise vier, kleeblattförmig angeordnete Funktionseinheiten auf. Bei den Funktionseinheiten kann es sich um separate Bauteile handeln. Alternativ können diese einstückig ausgebildet sein und ein gemeinsames Bauteil bilden.

An jeder Funktionseinheit ist genau ein rotierbares Arbeitsmesser angeordnet. Somit kann die Funktionsvorrichtung wenigstens drei, vorzugsweise vier, Arbeitsmesser aufweisen.

Die an den Funktionseinheiten angeordneten Arbeitsmesser ermöglichen ein exaktes Arbeiten im Nahbereich von Hindernissen.

Dadurch, dass je Funktionseinheit genau ein Arbeitsmesser vorgesehen ist, kann der Wartungsaufwand gering gehalten werden.

Die Funktionsvorrichtung ist selbst als Ganzes drehbar. Auf diese Weise kann sich die Funktionsvorrichtung um ein Hindernis herum bewegen. Beispielsweise kann das Hindernis teilweise oder vollständig umrundet werden. Das Hindernis kann dabei zwischen zwei kleeblattförmigen Funktionseinheiten aufgenommen sein. Beispielsweise Gras und/oder Unkraut im Nahbereich des Hindernisses kann somit entfernt werden.

Bei dem Hindernis kann es sich z.B. um einen Pfosten, beispielsweise Zaunpfosten, einen Ständer, beispielsweise eines Straßenschilds und/oder einer Leitpanke, einen Baum, z.B. Obstbaum, und/oder einen Strauch, z.B. eine Weinrebe, handeln.

Die Landmaschine eignet sich beispielsweise für den Einsatz beim Straßenunterhalt, bei Flughäfen, bei Weideflächen, z.B. Pferdekoppeln, beim Wein- und/oder Obstanbau, beim Hopfenanbau, bei Baumschulen und/oder Christbaumplantagen.

Weiterbildungen der Erfindung sind auch den abhängigen Ansprüchen, der Beschreibung sowie den beigefügten Zeichnungen zu entnehmen.

Gemäß einer Ausführungsform weist die Funktionsvorrichtung ein Planetengetriebe auf.

Vorzugsweise kann eine Hydraulikpumpe einen Keilriemen antreiben, welcher wiederum das Planetengetriebe antreibt. Auf diese Weise können auch die Arbeitsmesser angetrieben werden.

Bei dem Keilriemen kann es sich z.B. um einen XPB Keilriemen handeln.

Das Planetengetriebe weist vorzugsweise Stirnzahnräder auf. Diese können z.B. in ein Ölbad eingelassen sein. Durch dieses Ölbad wird eine Überhitzung verhindert. Das Getriebe ist dadurch langlebig.

Die Landmaschine kann beispielsweise mittels einer Kardanwelle des Fahrzeugs, z.B. des Traktors oder des Raupengeräts, angetrieben werden.

Vorzugsweise weist die Landmaschine, z.B. der Geräteträger, einen eigenen Öltank und/oder Ölkreislauf auf. Somit sind z.B. keine Hydraulikschläuche zwischen dem Fahrzeug und der Landmaschine notwendig. Die Landmaschine kann daher auch von schwächeren Zugmaschinen betrieben werden.

Die Kardanwelle des Fahrzeugs kann beispielsweise den eigenen Ölkreislauf der Landmaschine antreiben, sodass die Landmaschine autonom gesteuert werden kann. Die Steuerelemente der Landmaschine können z.B. am Fahrzeug oder am Geräteträger angebracht sein.

Nach einer weiteren Ausführungsform ist eine Rücklaufsperre für die drehbare Funktionsvorrichtung vorgesehen.

Beispielsweise kann die Rücklaufsperre als Einbaufreilauf ausgebildet sein. Ein Auskuppeln der Funktionsvorrichtung wird dadurch verhindert und die Gefahr, dass die Funktionsvorrichtung beschädigt wird, reduziert.

Die Landmaschine ist insgesamt vergleichsweise robust hergestellt, um den Wartungsaufwand zu minimieren und die Lebensdauer zu erhöhen.

Gemäß einer weiteren Ausführungsform ist der Ausleger hydraulisch verschwenkbar.

Der Ausleger kann somit mit einem Antrieb aus- und/oder eingeklappt werden. Dies ist deutlich komfortabler als ein manuelles Verschwenken des Auslegers.

Vorzugsweise können sämtliche Hydraulikschläuche zusammengebunden und/oder in einer Führungsschiene fixiert sein. Die Hydraulikschläuche sind auf diese Weise bei der Benutzung nicht im Weg.

Beispielsweise können die Hydraulikschläuche nummeriert sein. Dadurch können diese leicht ausgetauscht werden. So muss ein Kunde beispielsweise lediglich die Nummer des entsprechenden Schlauchs mitteilen und erhält daraufhin einen Schlauch mit der richtigen Länge und/oder mit den passenden Hydraulikanschlüssen.

Vorzugsweise kann ein Rückschlagventil vorgesehen sein. Dadurch werden selbst bei falsch angeschlossenen Hydraulikschläuchen Beschädigungen vermieden.

Das für die Hydraulikpumpe benötigte Hydrauliköl kann vorzugsweise ausgetauscht werden, ohne die gesamte Landmaschine auseinander bauen zu müssen. Hierzu kann eine von außen zugängliche Zufuhr und/oder ein von außen zugänglicher Abfluss vorgesehen sein.

Nach einer weiteren Ausführungsform ist das Arbeitsmesser als Schneidmesser ausgebildet.

Vorzugsweise sind sämtliche Arbeitsmesser als Schneidmesser ausgebildet.

Die Landmaschine kann beispielsweise zum Schneiden von Gras und/oder Unkraut verwendet werden.

Das Schneidmesser kann vorzugsweise als Wendemesser, z.B. beidseitig geschliffenes Messer, ausgebildet sein. Durch die symmetrische Ausbildung kann das Schneidmesser auf beiden Seiten schneiden. Sobald eine Klinge stumpf ist, kann das Schneidmesser einfach umgedreht werden.

Gemäß einer weiteren Ausführungsform ist das Arbeitsmesser als Krümelmesser ausgebildet.

Vorzugsweise sind sämtliche Arbeitsmesser als Krümelmesser ausgebildet.

Die Landmaschine kann alternativ oder zusätzlich zum Schneiden von Gras und/oder Unkraut beispielsweise zum Krümeln, also zum Auflockern des Bodens, verwendet werden. Nährstoffe können dadurch in den Boden gelangen.

Das Krümelmesser weist vorzugsweise gebogene Endbereiche auf. Diese können schwalbenflügelartig ausgebildet sein. Vergleichbar mit einer Hackkralle kann sich das Krümelmesser einige Zentimeter in die Erde bohren.

Aufgrund der Form werden keine Steine durch die Luft geschleudert.

Durch das Krümeln werden z.B. die Feinwurzeln des Grases und/oder des Unkrauts freigelegt, sodass es umgehend austrocknet.

Nach einer weiteren Ausführungsform ist die Rotationsgeschwindigkeit des Arbeitsmessers einstellbar.

Beim Krümeln wird die Drehzahl beispielsweise stark verringert. Beim Grasschneiden wird hingegen mit einer hohen Drehzahl gearbeitet, um eine hohe Schneidleistung zu erzielen.

Gemäß einer weiteren Ausführungsform ist das Arbeitsmesser austauschbar.

Es ist auch denkbar, anstelle der Arbeitsmesser die gesamte Funktionsvorrichtung auszutauschen.

Vorzugsweise können je nach Anwendung z.B. die Schneidmesser gegen die Krümelmesser ausgetauscht werden und umgekehrt. Die Landmaschine ist auf diese Weise vielseitig einsetzbar.

Beispielsweise kann zu Beginn und am Ende der Saison das Erdreich jeweils gekrümelt werden. Während der Saison kann hingegen Gras und/oder Unkraut abgeschnitten werden. Folglich kann mit einer Landmaschine die gesamte Unterstockbearbeitung erfolgen, ohne schädliche Unkrautvernichtungsmittel einsetzen zu müssen.

Nach einer weiteren Ausführungsform ist das Arbeitsmesser mittels genau einer Schraube, vorzugsweise Inbusschraube, an der Funktionseinheit befestigbar oder befestigt.

Dies ermöglicht einen schnellen Austausch des Arbeitsmessers, beispielsweise bei Verschleiß oder einem Wechsel zu einem Krümelmesser.

Die Schraube wird vorzugsweise entgegengesetzt zur Rotationsrichtung des Arbeitsmessers verschraubt. Ein ungewolltes Lösen während des Betriebs wird dadurch verhindert.

Gemäß einer weiteren Ausführungsform weisen die Randbereiche der Funktionseinheiten einen austauschbaren Gummipuffer auf.

Durch den Gummipuffer wird das Hindernis nicht beschädigt.

Nach einer weiteren Ausführungsform weist der Geräteträger Schleiffüße auf.

Die Schleiffüße, welche auch als Schleifschienen bezeichnet werden, liegen am Boden auf. Auf diese Weise befindet sich die gesamte Landmaschine stets in der richtigen Höhe zum Untergrund. So kann das Fahrzeug das Hebewerk beispielsweise in Schwimmstellung laufen lassen, während die Landmaschine von alleine die richtige Höhe beibehält.

Über die Schleifschienen kann die Landmaschine über den Untergrund gezogen und/oder geschoben werden.

Die Erfindung betrifft zudem ein Verfahren zum Mähen und/oder Krümeln mit einer erfindungsgemäßen Landmaschine.

Hierbei wird der Ausleger verschwenkt und die Funktionsvorrichtung wird zumindest abschnittsweise um ein Hindernis gedreht.

Auf diese Weise können selbst Flächen mit Hindernissen gemäht und/oder gekrümelt werden.

Alle hier beschriebenen Aspekte, Ausführungsformen und Merkmale der Erfindung können, vorzugsweise auch losgelöst von der konkreten Ausgestaltung, in deren Zusammenhang sie erwähnt werden, jeweils miteinander kombiniert werden. Vorzugsweise können alle Gegenstände der abhängigen Ansprüche untereinander und mit dem Gegenstand des unabhängigen Anspruchs kombiniert werden.

Die Erfindung wird im Folgenden beispielhaft unter Bezugnahme auf die Zeichnungen beschrieben. Es zeigen:
- Fig. 1 und 2: Perspektivansichten einer Ausführungsform einer erfindungsgemäßen Landmaschine,
- Fig. 3 und 4: Perspektivansichten einer Ausführungsform eines Auslegers
- mit: Funktionsvorrichtung einer erfindungsgemäßen Landmaschine,
- Fig. 5 und 6: Perspektivansichten einer Ausführungsform einer Funktionsvorrichtung einer erfindungsgemäßen Landmaschine, und
- Fig. 7: eine Seitenansicht einer Ausführungsform eines Krümelmessers einer erfindungsgemäßen Landmaschine.

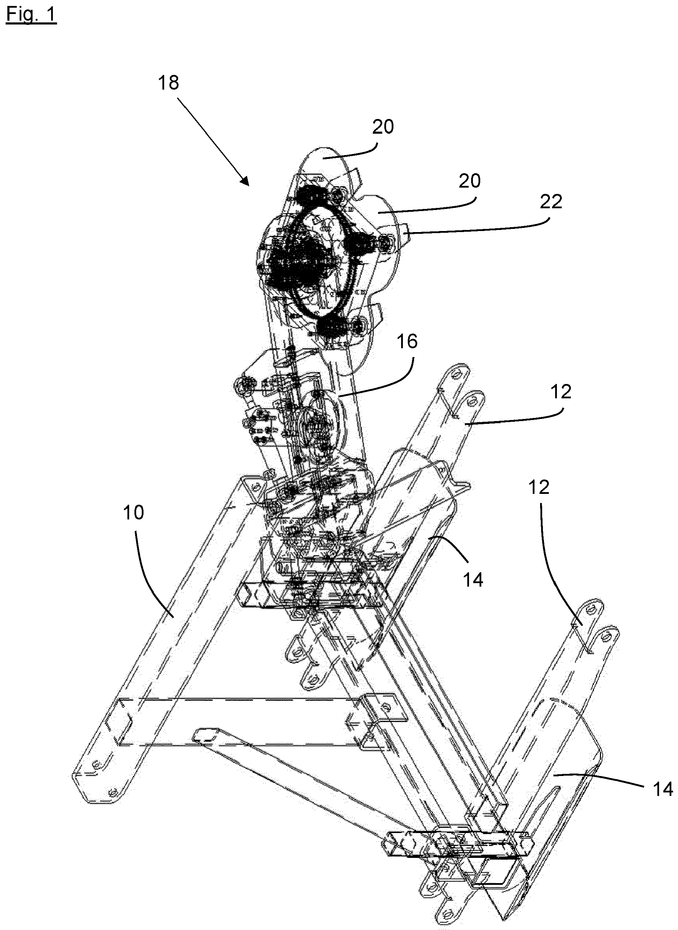

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Beispielsweise kann die Anzahl an Funktionseinheiten variieren. So sind z.B. drei oder fünf Funktionseinheiten denkbar. Anstelle der in den Fig. 1 bis 6 gezeigten Schneidmesser können Krümelmesser vorgesehen sein.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

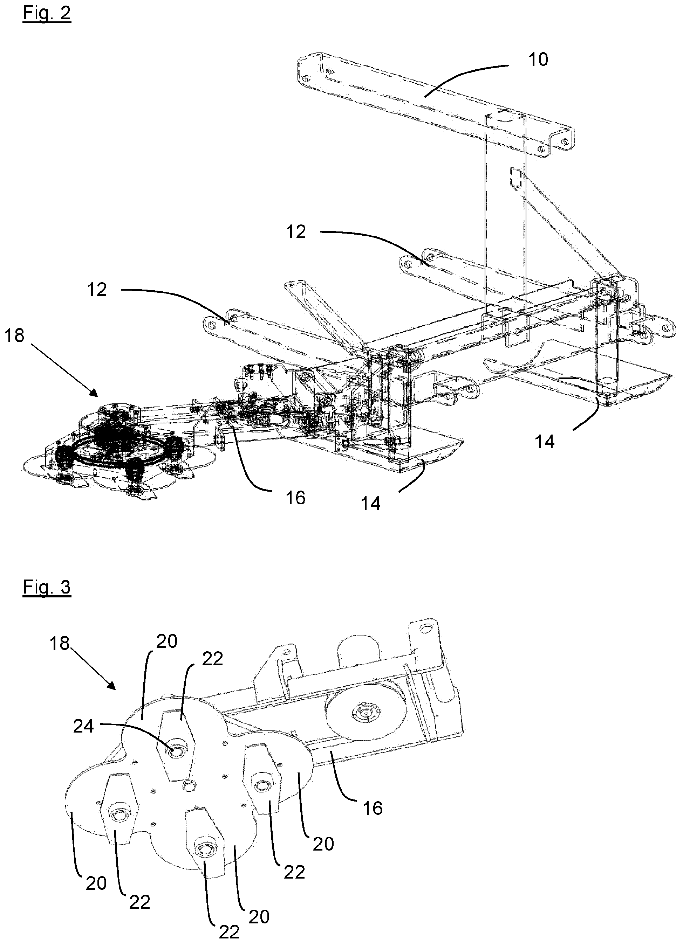

Fig. 1 und 2 zeigen eine Landmaschine mit einem Geräteträger 10, welcher eine Befestigungsvorrichtung 12 zur Befestigung an einem Fahrzeug aufweist.

Der Geräteträger 10 weist Schleiffüße 14 auf.

Ein Ausleger 16 ist relativ zum Geräteträger 10 verschwenkbar gelagert.

Eine Funktionsvorrichtung 18 ist drehbar am Ausleger 16 befestigt.

Die Funktionsvorrichtung 18 weist vier, kleeblattförmig angeordnete Funktionseinheiten 20 auf, wobei an jeder Funktionseinheit 20 genau ein rotierbares, als Schneidmesser 22 ausgebildetes Arbeitsmesser angeordnet ist.

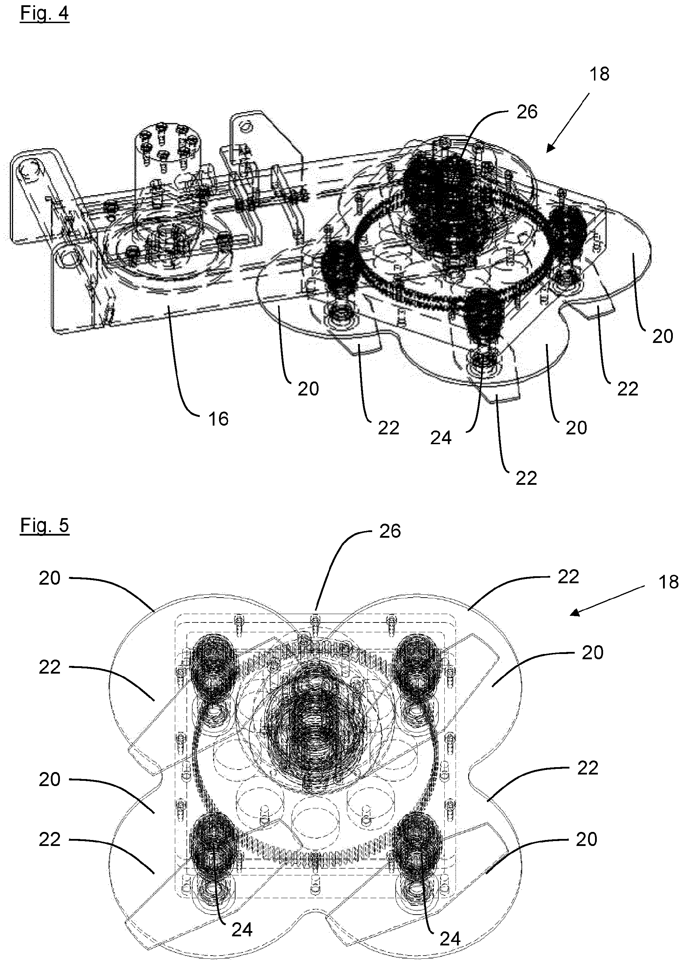

Wie in Fig. 3 und 4 dargestellt ist, sind die Arbeitsmesser 22 über jeweils eine Schraube 24 an der Funktionseinheit 20 verschraubt.

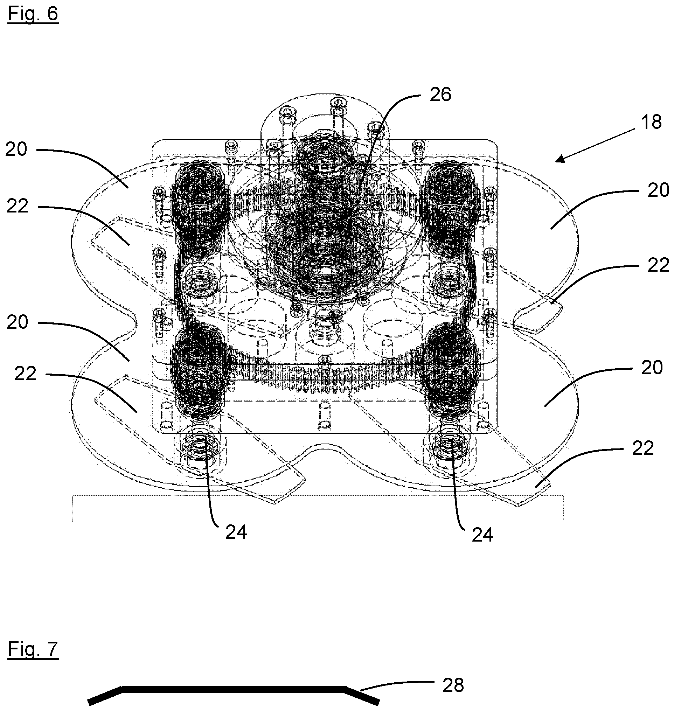

In Fig. 5 und 6 ist ersichtlich, dass die Arbeitsmesser 22 über ein Planetengetriebe 26 angetrieben werden.

Fig. 7 zeigt ein Krümelmesser 28. Die Enden sind, im Gegensatz zu einem Schneidmesser, nach unten gebogen. Dadurch kann der Boden aufgelockert werden, sodass Nährstoffe in diesen eindringen können.

### Bezugszeichenliste

- 10: Geräteträger
- 12: Befestigungsvorrichtung
- 14: Schleiffüße
- 16: Ausleger
- 18: Funktionsvorrichtung
- 20: Funktionseinheit
- 22: Schneidmesser, Arbeitsmesser
- 24: Schraube
- 26: Planetengetriebe
- 28: Krümelmesser

## Patentansprüche

1. Landmaschine, aufweisend
einen Geräteträger (10) mit einer Befestigungsvorrichtung (12) zur Befestigung an einem Fahrzeug,
einen relativ zum Geräteträger (10) verschwenkbar gelagerten Ausleger (16), und
eine drehbar am Ausleger (16) befestigte Funktionsvorrichtung (18), wobei die Funktionsvorrichtung (18) wenigstens drei, vorzugsweise vier, kleeblattförmig angeordnete Funktionseinheiten (20) aufweist, wobei an jeder Funktionseinheit (20) genau ein rotierbares Arbeitsmesser (22, 28) angeordnet ist.

2. Landmaschine nach Anspruch 1,
**dadurch gekennzeichnet,**
**dass** die Funktionsvorrichtung (18) ein Planetengetriebe (26) aufweist, das vorzugsweise über eine Hydraulikpumpe angetrieben wird.

3. Landmaschine nach Anspruch 1 oder 2,
**dadurch gekennzeichnet,**
**dass** eine Rücklaufsperre für die drehbare Funktionsvorrichtung (18) vorgesehen ist.

4. Landmaschine nach einem der vorhergehenden Ansprüche,
**dadurch gekennzeichnet,**
**dass** der Ausleger (16) hydraulisch verschwenkbar ist.

5. Landmaschine nach einem der vorhergehenden Ansprüche,
**dadurch gekennzeichnet,**
**dass** das Arbeitsmesser als Schneidmesser (22) ausgebildet ist.

6. Landmaschine nach einem der vorhergehenden Ansprüche,
**dadurch gekennzeichnet,**
**dass** das Arbeitsmesser als Krümelmesser (28) ausgebildet ist.

7. Landmaschine nach einem der vorhergehenden Ansprüche,
**dadurch gekennzeichnet,**
**dass** die Rotationsgeschwindigkeit des Arbeitsmessers (22, 28) einstellbar ist.

8. Landmaschine nach einem der vorhergehenden Ansprüche,
**dadurch gekennzeichnet,**
**dass** das Arbeitsmesser (22, 28) austauschbar ist.

9. Landmaschine nach einem der vorhergehenden Ansprüche,
**dadurch gekennzeichnet,**
**dass** das Arbeitsmesser (22, 28) mittels genau einer Schraube (24), vorzugsweise Inbusschraube, an der Funktionseinheit (20) befestigbar oder befestigt ist.

10. Landmaschine nach einem der vorhergehenden Ansprüche,
**dadurch gekennzeichnet,**
**dass** die Randbereiche der Funktionseinheiten (20) einen austauschbaren Gummipuffer aufweisen.

11. Landmaschine nach einem der vorhergehenden Ansprüche,
**dadurch gekennzeichnet,**
**dass** der Geräteträger (10) Schleiffüße (14) aufweist.

12. Verfahren zum Mähen und/oder Krümeln mit einer Landmaschine nach einem der vorhergehenden Ansprüche, bei dem
der Ausleger (16) verschwenkt wird und
die Funktionsvorrichtung (18) zumindest abschnittsweise um ein Hindernis gedreht wird.
